# EUROPÄISCHE PATENTSCHRIFT

(11) **EP 2 754 367 B1**
(45) Veröffentlichungstag und Bekanntmachung des Hinweises auf die Patenterteilung: **19.07.2017**
(21) Anmeldenummer: 13151140.4
(22) Anmeldetag: 14.01.2013
(51) Int. Cl.: A47B 47/00, F16B 12/44

(54) **Rahmensystem und Knotenelement**
Frame system and node element
Système de cadre et élément de noeud

(43) Veröffentlichungstag der Anmeldung: 16.07.2014
(73) Patentinhaber: elmar. Flötotto. service holding GmbH, 33334 Gütersloh (DE)
(72) Erfinder: Aisslinger, Werner, 10557 Berlin (DE)
(74) Vertreter: Prinz & Partner mbB

(56) Entgegenhaltungen:
- WO-A1-2012/001453
- GB-A- 1 186 503
- US-A- 3 873 219

## Beschreibung

Die Erfindung betrifft ein Rahmensystem, insbesondere ein Möbelsystem, mit zumindest drei länglichen Rahmenelementen, von denen mindestens zwei senkrecht zueinander angeordnet sind, und mit zumindest einem Knotenelement zum Verbinden der Rahmenelemente. Die Erfindung betrifft des Weiteren ein Knotenelement, insbesondere für ein Rahmensystem, zur Montage von mindestens drei Rahmenelementen, von denen mindestens zwei senkrecht zueinander angeordnet sind.

Ein solches Rahmensystem wird beispielsweise dafür verwendet werden, ein flexibles, modulares Möbelsystem herzustellen. Die länglichen Rahmenelemente können mit den Knotenelementen beliebig, vorzugsweise rechtwinklig oder in einem Winkel von 180°, verbunden werden, sodass ein Rahmen für ein Möbelstück, beispielsweise ein Regal, ein Schrank oder ein Tisch hergestellt werden kann. Die im Rahmensystem gebildeten Fächer können beispielsweise mit Einlegeböden als Regalfächer genutzt werden oder mit Schubladen oder anderen Möbelelementen gefüllt werden. Ein Rahmensystem ist beispielsweise aus Dokument US 3,873,219 zu entnehmen. Aus optischen Gründen ist es erwünscht, dass die Knotenelemente von außen nicht oder nur unwesentlich sichtbar sind, also die Rahmenelemente bündig aneinander anstoßen. Aus dem Stand der Technik sind zwar Rahmensysteme und Knotenelemente bekannt, mit denen die Rahmenelemente miteinander verbunden werden. Diese bieten aber entweder keine ausreichende Stabilität oder sind sehr aufwendig zu montieren.

Aufgabe der Erfindung ist es, ein Rahmensystem zu schaffen, das aus mehreren länglichen Rahmenelementen und mehreren Knotenelementen mit geringem Aufwand flexible und modular zusammengebaut werden kann, so dass sich ein mechanisch stabiler Rahmen mit ansprechender Optik ergibt.

Zur Lösung der Aufgabe ist ein Rahmensystem, insbesondere ein Möbelsystem, mit zumindest drei länglichen Rahmenelementen vorgesehen, von denen mindestens zwei senkrecht zueinander angeordnet sind, und mit zumindest einem Knotenelement zum Verbinden der Rahmenelemente. Zur Lösung der Aufgabe ist auch ein Knotenelement vorgesehen, insbesondere für ein erfindungsgemäßes Rahmensystem, zur Montage von mindestens drei Rahmenelementen, von denen mindestens zwei senkrecht zueinander angeordnet sind, mit zumindest zwei Haltestegen, die insbesondere jeweils eine Öffnung für ein Befestigungsmittel aufweisen, wobei auf der Außenseite des ersten Haltestegs eine erste Anlagefläche für eine erste Stirnseite eines ersten Rahmenelements sowie auf der Außenseite des zweiten Haltestegs eine zweite Anlagefläche für eine erste Stirnseite eines zweiten Rahmenelements vorgesehen sind, und wobei zwischen den Haltestegen eine Aufnahme gebildet ist, die zumindest zwei Seitenflächen des dritten Rahmenelements aufnehmen kann. An zumindest einer Stirnseiten des ersten und des zweiten Rahmenelements ist jeweils eine im Wesentlichen komplementär zum jeweiligen Haltesteg ausgebildete Ausnehmung vorgesehen, die den jeweiligen Haltesteg aufnehmen kann, sodass der Haltesteg im Wesentlichen bündig mit der Stirnseite aufgenommen ist.

Das erste und das zweite Rahmenelement werden von außen auf die Haltestege des Knotenelements aufgesetzt, so dass die Haltestege nicht über die Stirnseiten der Rahmenelemente vorstehen, und an den Haltestegen fixiert. Anschließend wird das dritte Rahmenelement in die Aufnahme eingeschoben und in dieser fixiert. Da die Haltestege im Wesentlichen vollständig in den Ausnehmungen an den Stirnseiten aufgenommen sind, sind die Stirnseiten der Rahmenelemente bündig mit den Innenseiten der Haltestege angeordnet. Dadurch liegen das erste und das zweite Rahmenelement bei in die Aufnahme eingeschobenem drittem Rahmenelement jeweils bündig mit ihren Stirnseiten an einer Seitenfläche des dritten Rahmenelements an. Da die Stirnseiten der ersten zwei Rahmenelemente bündig am dritten Rahmenelement anliegen, ist das Knotenelement von außen nicht oder nur unwesentlich sichtbar. Da das dritte Rahmenelement an den Innenseiten der Haltestege anliegt und diese stützt, ist zudem das Knotenelement stabilisiert, so dass eine Verformung des Knotenelements sicher verhindert ist.

Um die Rahmenelemente sicher am Knotenelement zu befestigen, sind Befestigungsmittel zur Befestigung der Rahmenelemente am Knotenelement vorgesehen. Ein erstes Befestigungsmittel erstreckt sich von der Aufnahme durch den ersten Haltesteg nach außen und in das erste Rahmenelement und fixiert dieses am ersten Haltesteg des Knotenelements. Ein zweites Befestigungsmittel erstreckt sich von der Aufnahme durch den zweiten Haltesteg in das zweite Rahmenelement und fixiert dieses am zweiten Haltesteg. Ein drittes Befestigungsmittel erstreckt sich von außen durch eine Öffnung im Knotenelement in die Aufnahme und in das dritte Rahmenelement. Zur Montage des Rahmensystems werden das erste und das zweite Befestigungsmittel, nachdem das erste und das zweite Rahmenelement auf die jeweiligen Haltestege aufgesetzt sind, von der Aufnahme nach außen in das jeweilige Rahmenelement geführt und in diesem verankert. Die Befestigungsmittel schließen mit der Innenseite der Haltestege bündig ab, ragen also nicht in die Aufnahme hinein. Anschließend wird das dritte Rahmenelement in die Aufnahme geschoben und mit dem dritten Befestigungsmittel, das sich von außen in die Aufnahme erstreckt, in dieser fixiert. Am Knotenelement muss lediglich eine Öffnung vorhanden sein, durch die das dritte Befestigungsmittel von außen in die Aufnahme eingeführt werden kann. Das dritte Rahmenelement verdeckt die Stirnseiten des ersten und des zweiten Rahmenelement mit den Haltestegen, die in den Ausnehmungen der Stirnseiten aufgenommen sind, so dass diese nicht sichtbar sind. Auch die Befestigungsmittel, die sich von der Aufnahme in das erste und das zweite Rahmenelement erstrecken, sind dadurch verdeckt. Während der Montage sind die Befestigungsmittel aber gut erreichbar, so dass das Rahmensystem mit geringem Aufwand zusammengebaut werden kann. Von außen ist somit lediglich das dritte Befestigungsmittel bzw. die Öffnung für das dritte Befestigungsmittel sichtbar. Diese können beispielsweise auf der Innenseite eines Rahmendreiecks oder des Rahmensystems angeordnet sein, sodass diese von außen nicht sichtbar sind.

Als Befestigungsmittel können insbesondere Schrauben verwendet werden, mit denen die Rahmenelemente spielfrei an Knotenelement angeschraubt werden können. Schrauben ermöglichen auch, das Rahmensystem wieder zu demontieren und in anderer Konfiguration neu aufzubauen.

In den Stirnseiten der Rahmenelemente können Löcher vorgebohrt sein, in die die Schrauben eingeschraubt werden.

Gemäß einer ersten Ausführungsform des Knotenelements ist dieses als Winkelelement ausgeführt. Dabei erstecken sich die Haltestege senkrecht zueinander. Die Öffnung für das Befestigungsmittel des dritten Rahmenelements kann zwischen den Haltestegen angeordnet sein und sich von der Außenseite bis zur Aufnahme zwischen den Haltestegen erstrecken, wobei die Mittelachse der Öffnung insbesondere in einem Winkel von 45° zu einer der Anlageflächen ausgerichtet ist. Der Winkel von 45° stellt zum einen sicher, dass das Befestigungsmittel, beispielsweise die Schraube, mittig in das Rahmenelement eingeschraubt wird, sodass ein Ausbrechen des Befestigungsmittels aus dem dritten Rahmenelement sicher verhindert ist. Zu anderen stellt dieser Winkel eine gute Erreichbarkeit des Befestigungsmittels mit Werkzeugen sicher, da ein ausreichender Abstand zu den benachbarten Rahmenelementen sichergestellt ist. Ein solches Knotenelement wird beispielsweise für eine Eckverbindung des Rahmensystems oder eine Kante verwendet, bei der drei Rahmenelemente senkrecht aufeinandertreffen, also in den drei Raumrichtungen eines kartesischen Koordinatensystems. Das dritte Rahmenelement kann beispielsweise eine senkrechte Stütze sein, und das erste und das zweite Rahmenelement sind Teil einer waagrechten Ebene, beispielsweise eines Regalbodens.

Gemäß einer zweiten Ausführungsform ist das Knotenelement U-förmig ausgeführt. Dabei ist ein dritter Haltesteg mit einer dritten Anlagefläche für die Stirnseite eines weiteren Rahmenelements vorgesehen, wobei im dritten Haltesteg eine Öffnung für ein Befestigungsmittel vorgesehen ist. Der erste und der zweite Haltesteg sind an gegenüberliegenden Seiten des dritten Haltestegs, insbesondere in einem Winkel von 90° zu diesem angeordnet. Diese Ausführungsform wird beispielsweise in einem Mittelbereich verwendet, in dem insgesamt vier Rahmenelemente aufeinandertreffen, wobei das erste, das zweite sowie das weitere Rahmenelement in einer Ebene, beispielsweise in einer waagrechten Ebene liegen und das dritte Rahmenelement senkrecht zu dieser Ebene angeordnet ist. Das erste und das zweite Rahmenelement erstrecken sich in entgegengesetzte Richtungen, auf einer Linie liegend, vom Knotenelement weg, so dass zusammen mit dem dritten Rahmenelement eine T-Form gebildet ist. Am weiteren Rahmenelement ist vorzugsweise an der Stirnseite ebenfalls eine zum dritten Haltesteg komplementäre Ausnehmung vorgesehen, die den dritten Haltesteg so aufnehmen kann, dass der Haltesteg im Wesentlichen bündig mit der Stirnseite aufgenommen ist.

Unabhängig von der Anzahl und der Anordnung der Haltestege kann zwischen benachbarten Haltestegen jeweils eine nach außen gerichtete Anbaufläche vorgesehen sein, die insbesondere in einem Winkel von 45° zu den angrenzenden Anlageflächen angeordnet ist. Dabei kann sich die Öffnung für das Befestigungsmittel des dritten Rahmenelements durch die Anbaufläche erstrecken, sodass durch die Anbaufläche eine senkrecht zur Längsrichtung des Befestigungsmittels angeordnete Ebene zum Abstützen des Befestigungsmittels vorhanden ist.

Bei der U-förmigen Ausgestaltung des Knotenelements ist die Montage der Befestigungsmittel von der Aufnahme aus nur schwer möglich, da der Arbeitsraum für Werkzeuge durch den jeweils anderen gegenüberliegenden Haltesteg eingeschränkt ist. Um bei einem solchen Rahmensystem eine einfache Montage zu ermöglichen, besteht das Knotenelement vorzugsweise aus zwei Knotenbauteilen, wobei die erste Anlagefläche am ersten Knotenbauteil und die zweite Anlagefläche am zweiten Knotenbauteil vorgesehen ist. Die Knotenbauteile weisen überlappende Verbindungsstege auf. In diesen sind komplementäre Öffnungen für ein Befestigungsmittel für ein weiteres Rahmenelement vorgesehen, das sich insbesondere von der Aufnahme nach außen erstreckt, wobei die überlappenden Verbindungsstege den dritten Haltesteg bilden und das Befestigungsmittel, das sich durch die Öffnung der Verbindungsstege erstreckt, das weitere Rahmenelement fixiert, das an der dritten Anlagefläche befestigt ist.

Zur Montage dieses Rahmensystems wird das erste Knotenbauteil mit der ersten Anlagefläche am ersten Rahmenelement befestigt. Anschließend wird das zweite Knotenbauteil mit der zweiten Anlagefläche am zweiten Rahmenelement befestigt. Da die Knotenbauteile voneinander getrennt sind, sind die Haltestege bzw. die Öffnungen für das erste bzw. das zweite Befestigungsmittel für das erste bzw. das zweite Rahmenelement jeweils gut erreichbar, so dass die Knotenbauteile am jeweiligen Rahmenelement gut montiert werden können. Anschließend werden die Knotenbauteile mit den daran montierten Rahmenelementen so zusammengeführt, dass sich die Verbindungsstege überlappen und die Öffnungen in den Verbindungsstegen konzentrisch zueinander angeordnet sind. Nach dem Zusammenführen der Verbindungsstege wird ein drittes Befestigungsmittel durch die Öffnungen im dritten Haltesteg in die Stirnseite eines weiteren Rahmenelements, das an der dritten Anlagefläche befestigt wird, geführt und das dritte Rahmenelement so am Befestigungsknoten fixiert.

Die Knotenbauteile sind aneinander durch das Befestigungsmittel, das sich durch die beiden überlappenden Verbindungsstege erstreckt, aneinander fixiert, sodass der gesamten Knoten zusammengehalten ist. Die Verbindungsstege sind beispielsweise komplementär gestuft ausgeführt, so dass diese in zusammengestecktem Zustand nicht gegeneinander verschoben oder verschwenkt werden können. Durch den zweiteiligen Aufbau ist also sichergestellt, dass zu den jeweiligen Montageschritten die Stirnseiten bzw. die jeweiligen Haltestege mit einem Befestigungsmittel bzw. dem dazu benötigten Werkzeug einfach zu erreichen sind.

Der jeweilige Haltesteg ist in der jeweiligen Ausnehmung des ersten und/oder des zweiten Rahmenelements im Wesentlichen vollständig aufgenommen, sodass der Haltesteg bzw. das Knotenelement nicht über die Seitenflächen des jeweiligen Rahmenelement überstehen und insbesondere von außen nicht oder nur minimal sichtbar ist. Die Ausnehmung des ersten und des zweiten Rahmenelements kann sich allerdings bis zu mindestens einer Seitenfläche erstrecken, und eine zwischen den Haltestegen angeordnete Anbaufläche kann über die Seitenfläche des Rahmenelements vorstehen. Der Haltesteg bzw. die Anlagefläche ist weiterhin im Wesentlichen in der Ausnehmung angeordnet bzw. der Rand des Haltesteges verläuft bündig mit der Seitenfläche, sodass dieser nicht über die Seitenfläche vorsteht. Lediglich die Anbaufläche, die beispielsweise die Öffnung für das Befestigungsmittel des dritten Rahmenelements aufweist, ist von außen sichtbar bzw. erreichbar, beispielsweise, um ein Befestigungsmittel für das dritte Rahmenelement in die Aufnahme einzuführen.

Zusätzlich zu der Anbaufläche, die zwischen benachbarten Haltestegen angeordnet ist, kann an zumindest einem Haltesteg eine zusätzliche Anbaufläche mit einer Öffnung vorgesehen sein, die zu einer angrenzenden Anlagefläche einen Winkel von 45° aufweist, wobei die Anbaufläche inbesondere über die Seitenfläche des Rahmenelements vorstehen kann. Die Öffnung dieser Anbaufläche kann beispielsweise zur Aufnahme eines weiteren Befestigungsmittels zur zusätzlichen Fixierung des dritten Rahmenteils verwendet werden. Es ist aber auch denkbar, dass an dieser Anbaufläche ein Halteteil zur Anbringung zusätzliche Möbelelemente, beispielsweise Schubladenführungen, Paneele, Wandteile oder Scharniere, oder diese Möbelelemente unmittelbar montiert werden.

Vorzugsweise ist zumindest ein Halteelement für ein insbesondere flächiges Wandbauteil vorgesehen, das an einer Anbaufläche mit einem Befestigungsmittel gehalten ist. Das Halteelement kann beispielsweise mit dem Befestigungsmittel, das zur Befestigung des dritten Rahmenelements vorgesehen ist, an der Anbaufläche fixiert werden. Es ist aber auch denkbar, dass an einer Anbaufläche, die nicht zur Aufnahme des Befestigungsmittels für das dritte Rahmenelement verwendet wird, ein zusätzliches Befestigungsmittel fixiert wird. Es ist auch denkbar, dass in der Öffnung dieser Anbaufläche ein Gewinde für ein Befestigungsmittel vorgesehen ist.

Insbesondere ist am Halteelement und am Wandbauteil ein Befestigungssystem vorgesehen, mit einer topfförmigen Aufnahme und einem Kopfteil, das in der Aufnahme einschnappen kann. Die Aufnahme und das Kopfteil funktionieren nach dem Prinzip eines Druckknopfs, wobei in der Aufnahme ein Federelement, beispielsweise eine Bügelfeder vorgesehen ist, die durch das Kopfteil aufgeweitet werden und hinter dem Kopfteil einschnappen kann. Bei herkömmlichen Rastverbindungen besteht die Gefahr, dass Teile der Rastverbindung durch die hohen Auszugskräfte beschädigt werden. Ein erfindungsgemäßes Befestigungssystem bietet demgegenüber den Vorteil, dass eine werkzeuglose Demontage des Wandbauteils möglich ist, ohne dass die Gefahr einer Beschädigung des Befestigungssystems oder der damit angebrachten Bauteile besteht.

Um das Knotenelement zu stabilisieren, kann zwischen benachbarten Haltestegen in der Aufnahme ein Verstärkungselement vorgesehen sein. Bei einer solchen Ausführungsform ist am dritten Rahmenelement eine zum Verstärkungselement komplementäre Aussparung vorgesehen, in die das Verstärkungselement eingreifen kann. Dies ist erforderlich, um das dritte Rahmenelement vollständig in die Aufnahme einschieben zu können. Das Verstärkungselement kann in dieser Ausführungsform aber als zusätzliche Ausrichthilfe bzw. als Auflager für das Knotenelement verwendet werden, sodass dieses nicht in Längsrichtung des dritten Rahmenelements relativ zum dritten Rahmenelement verschoben werden kann.

Das Knotenelement kann aus Kunststoff bestehen, insbesondere aus Polyoxymethylen (POM). Dieses Material ist insbesondere zur Verwendung bei Möbel vorteilhaft, da es zum einen eine ausreichende Festigkeit bereitstellt und zum anderen nicht spröde ist, so dass Belastungen und geringfügige Toleranzen zuverlässig aufgenommen werden können.

Wenn das Knotenelement für andere Rahmensysteme verwendet wird als im Möbelbau, beispielweise für Tragwerke für Carports, Gartenhäuser, etc., kann es auch aus Metall bestehen, um höhere Anforderungen an die Festigkeit zu erfüllen.

Die Rahmenelemente können beispielsweise aus Holz, insbesondere aus Massivholz, oder Metall hergestellt sein.

Das Rahmensystem kann weitere Bauteile aufweisen. Ist das Rahmensystem als Möbelsystem vorgesehen, können beispielsweise weitere Möbelmodule, wie Schubladen, Türen Schränkeinsätze etc. vorgesehen sein, die an den Knotenelementen oder den Rahmenelementen befestigt werden.

Weitere Merkmale und Vorteile finden sich in der nachfolgenden Beschreibung in Verbindung mit den beigefügten Zeichnungen. In diesen zeigen:
- Figur 1 ein erfindungsgemäßes Rahmensystem,
- Figur 2 eine erste Ausführungsform eines erfindungsgemäßen Knotenelements in einer perspektivischen Ansicht,
- Figuren 3a bis 3f verschiedene Ansichten des Knotenelements aus Figur 2,
- Figuren 4a bis 4k verschiedene Verfahrensschritte zur Montage eines erfindungsgemäßen Rahmensystems,
- Figur 5a und 5b eine zweite Ausführungsform eines erfindungsgemäßen Knotenelements, das aus zwei Knotenbauteilen zusammengesetzt ist,
- Figuren 6a bis 6g verschiedene Ansichten eines der Knotenbauteile des Knotenelements aus Figur 5, und
- Figuren 7a bis 7g verschiedene Ansichten des anderen Knotenbauteils des Knotenelements aus Figur 5.

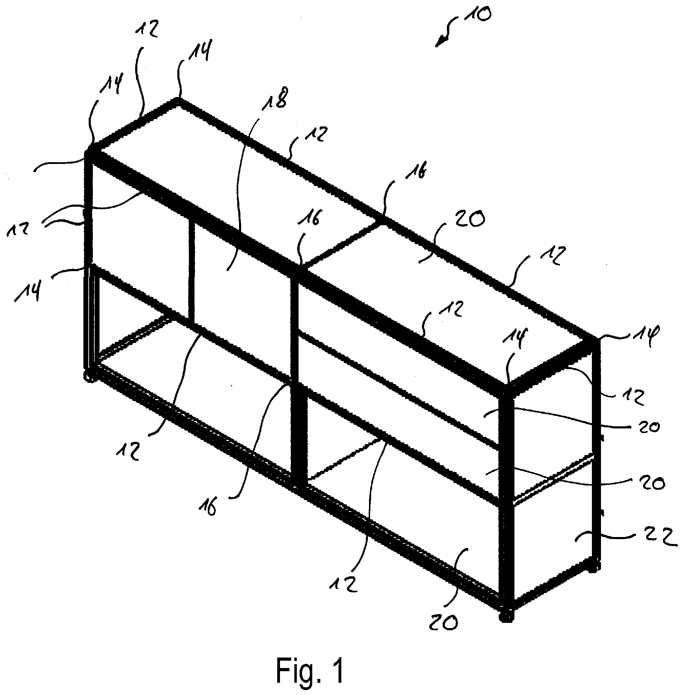

In Figur 1 ist ein Rahmensystem 10, das hier Teil eines Möbels ist. Auch wenn die Erfindung nachfolgend am Beispiel eines Möbels beschrieben wird, kann sie auch für andere Gegenstände verwendet werden, die ein Rahmensystem enthalten. Beispiele sind Carports, Gartenhäuser oder Garagen.

Das in Figur 1 gezeigte Rahmensystem besteht aus mehreren länglichen Rahmenelementen, die in dieser Übersichtszeichnung allgemein mit dem Bezugszeichen 12 bezeichnet sind, und die durch mehrere Knotenelemente 14, 16 miteinander verbunden sind. Die Rahmenelemente 12 sowie die Knotenelemente 14, 16 sind Teil eines modulartigen Baukastens, so dass das Rahmensystem 10 in alle Richtungen beliebig mit weiteren Rahmenelementen 12 und weiteren Knotenelementen 14, 16 erweiterbar ist.

Durch die Rahmenelemente des Rahmensystems 10 sind Fächer 18 gebildet, die beispielsweise mit Schubladen 20 gefüllt, durch Türen verschlossen oder in die andere bekannte Möbelelemente eingesetzt werden können.

Des Weiteren sind flächige Wandbauteile 22 vorgesehen, die die Seitenflächen und die Ober- und Unterseite des Rahmensystems 10 verschließen.

Die Rahmenelemente 12 sind als Stangen ausgeführt, die hier einen rechteckigen und insbesondere quadratischen Querschnitt haben. Sie können insbesondere aus Holz bestehen. Alternativ kann auch Metall als Material gewählt werden.

Zum Verbinden der Rahmenelemente 12 sind lediglich zwei verschiedene Arten von Knotenelementen 14, 16 vorgesehen. Wesentliches Merkmal des Rahmensystems und der Knotenelemente ist, dass die Knotenelemente von außen zwischen den Rahmenelementen nicht oder nur geringfügig sichtbar sind.

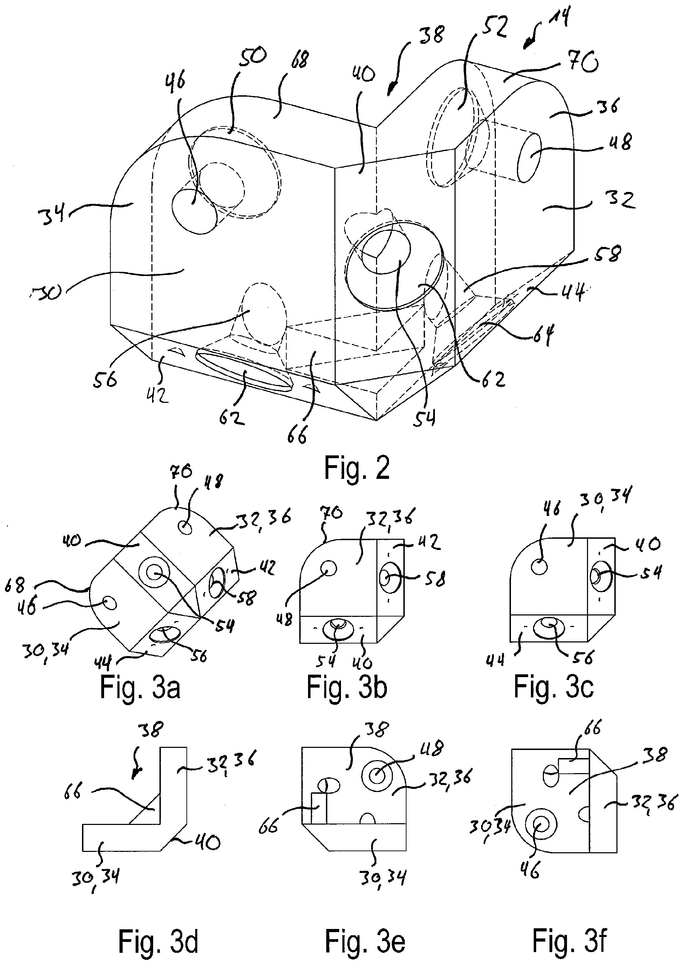

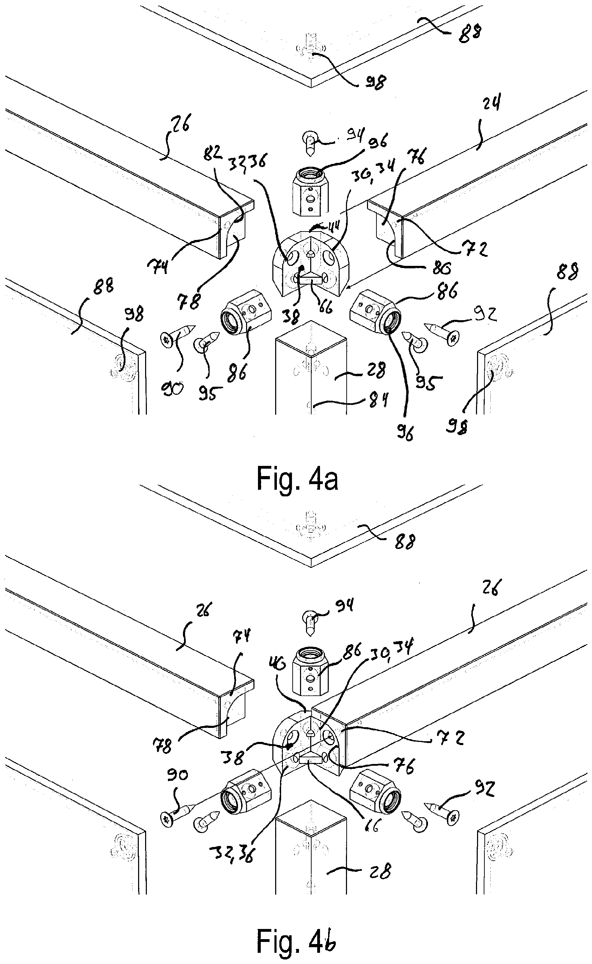

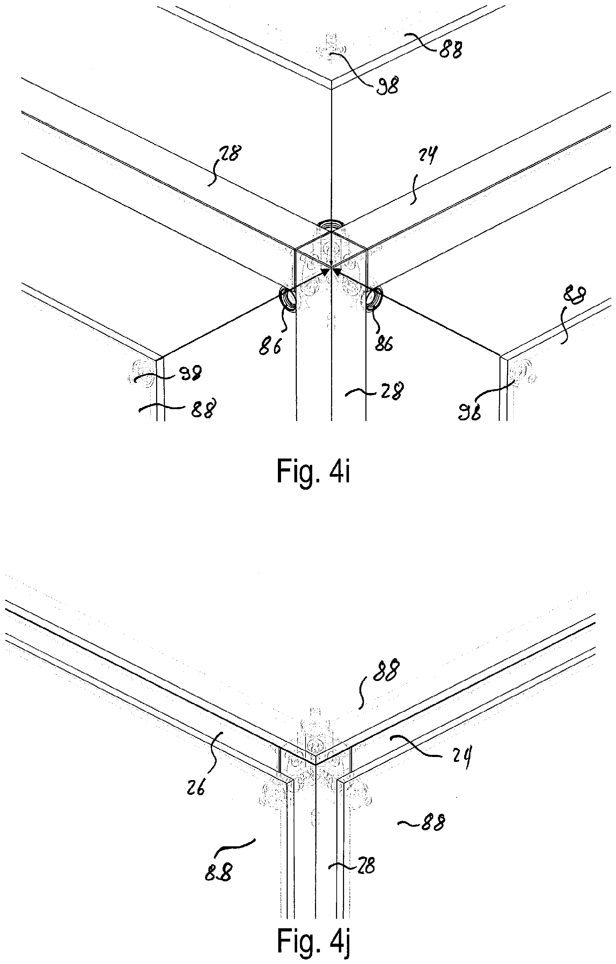

Eine erste Ausführungsform eines Knotenelements 14, das zur Verbindung von drei Rahmenelementen 24, 26, 28 verwendet wird, beispielsweise an einer Ecke oder einer senkrechten Kante des Rahmensystems, ist in Figur 2 dargestellt. An diesem Knotenelement 14 sind drei Rahmenelemente 24, 26, 28 (siehe auch Figur 4a) gehalten, die jeweils senkrecht zueinander angeordnet sind, also gewissermaßen in den drei Raumrichtungen ausgerichtet sind. Das erste Rahmenelement 24 bildet eine vordere waagrechte Kante des Rahmensystems, das zweite Rahmenelement ragt rechtwinklig zum ersten Rahmenelement 24 nach hinten und definiert mit dem ersten Rahmenelement 24 eine Ebene, beispielsweise eine Regalebene. Das dritte Rahmenelement 28 bildet eine senkrechte Stütze.

Das Knotenelement 14 hat die Grundform eines Winkelstücks und weist zwei Haltestege 30, 32 auf, die im Wesentlichen rechtwinklig zueinander angeordnet sind und auf der Außenseite jeweils eine Anlagefläche 34, 36 aufweisen. Diese dienen zur Befestigung des ersten und des zweiten Rahmenelement 24, 26. Zwischen den Haltestegen 30, 32 bzw. durch die Innenseiten der Haltestege 30, 32 ist eine Aufnahme 38 für das dritte Rahmenelement 28 gebildet.

Auf der Außenseite des Knotenelements 14 ist zwischen den Anlageflächen 34, 36 eine Anbaufläche 40 vorgesehen, die in einem Winkel von 45° zu den Anlageflächen 34, 36 angeordnet ist und sich direkt an die Anlageflächen 34, 36 anschließt. An der bezüglich Figur 2 unteren Rand der Haltestege ist jeweils eine weitere Anbaufläche 42, 44 vorgesehen, die bezüglich der jeweiligen Anlagefläche 34, 36 in einem Winkel von 45° geneigt ist.

In den Haltestegen 30, 32 ist jeweils eine Öffnung 46, 48 vorgesehen, die sich von der Aufnahme 38 zu den Anlageflächen 34, 36 erstreckt. Auf der Innenseite ist jeweils eine Aussparung 50, 52 für den Kopf eines Befestigungsmittels vorgesehen, die als Ansenkung ausgeführt sein kann.

In den Anbauflächen 40, 42, 44 sind ebenfalls Öffnungen 54, 56, 58 vorgesehen, die sich bis zur Aufnahme erstrecken, wobei bei diesen Öffnungen 54, 56, 58 jeweils auf der Außenseite, also an der Anbaufläche 40, 42, 44, eine Aussparung 60, 62, 64 für den Kopf eines Befestigungsmittels vorgesehen ist.

In der Aufnahme 38 ist des Weiteren ein Verstärkungselement 66 vorgesehen, durch das die Haltestege 30, 32 gegeneinander abgestützt werden. Dies erhöht die Steifigkeit gegen ein Verbiegen der beiden Haltestege relativ zueinander.

Die freien Ränder 68, 70 der Haltestege 30, 32 sind an ihrer von den beiden Anbauflächen 40, 42 bzw. 40, 44 abgewandten Seiten bogenförmig ausgeführt (siehe in Figur 3b die linke obere "Ecke" sowie in Figur 3e die rechte obere "Ecke"). Der bogenförmige Bereich verläuft dabei konzentrisch zur Mittelachse der Öffnung 46, 48 im entsprechenden Haltesteg 30, 32. Somit besteht jeder Rand aus einer geraden Abschnitt, einem bogenförmigen Abschnitt und wiederum einem geraden Abschnitt.

Wie insbesondere in Figur 4a zu sehen ist, werden am Knotenelement 14 drei Rahmenelemente 24, 26, 28 befestigt. Ein erstes Rahmenelement 24 wird mit einer Stirnseite 72 an der ersten Anlagefläche 34 des ersten Haltestegs 30 montiert. Das zweite Rahmenelement 26 wird mit einer Stirnseite 74 an der zweiten Anlagefläche 36 des zweiten Haltestegs 32 montiert. Das dritte Rahmenelement 28 wird mit zwei Seitenflächen in der Aufnahme 38 montiert.

Wie in Figur 4a zu sehen ist, weisen die Stirnseiten 72, 74 des ersten Rahmenelements 24 und des zweiten Rahmenelements 26 Ausnehmungen 76, 78 auf, die im Wesentlichen komplementär zur Kontur der Haltestege 30, 32 des Knotenelements 14 ausgebildet sind. Bezüglich einer Diagonalen durch die bezüglich Figur 4a außenliegende obere Ecke und die innenliegende untere Ecke sind die Stirnseiten 72, 74 und die Ausnehmungen im Wesentlichen spiegelsymmetrisch ausgebildet. Analog dazu sind also auch die Haltestege 30, 32 spiegelsymmetrisch.

Aufgrund der Ausnehmungen 76, 78 sind die Stirnseiten der Rahmenelemente gestuft ausgeführt und werden gebildet durch die eigentliche Stirnfläche des Rahmenelements und die Bodenfläche der Ausnehmung.

An den bezüglich Figur 4a unteren und innenliegenden Kante der Stirnseite 72, 74 erstrecken sich die Ausnehmungen 76, 78 bis zu diesen Kanten, sodass die Ausnehmung zu diesen Seiten offen ist.

Der Rand 80 bzw. 82 der Ausnehmung 76, 78 verläuft ähnlich wie der Rand 68, 70 zunächst geradlinig, dann bogenförmig konkav gekrümmt und anschließend wieder geradlinig. wobei die Ausnehmung so gewählt ist, dass die Längsachse des Rahmenelements innerhalb der Ausnehmung 76, 78 liegt, gleichzeitig aber im Bereich der Krümmung des Randes 80, 82 eine möglichst große Fläche der eigentlichen Stirnfläche stehenbleibt.

Die Kontur der Ausnehmungen 76, 78 und der Rand der Halteteile sind so geformt, dass durch diese eine bezüglich der Längsachse der Rahmenelemente 24, 26 drehmomentfeste Verbindung zwischen dem Knotenelement 14 und den Rahmenelementen 24, 26 hergestellt werden kann.

Die Stirnseite des dritten Rahmenelements 28 ist eben ausgeführt. Allerdings weist das dritte Rahmenelement an der Kante, die in die Aufnahme 38 des Knotenelements 14 eingesetzt wird, eine komplementär zum Verstärkungselement 66 ausgebildete Aussparung 84 auf.

Des Weiteren weist das Rahmensystem 10 mehrere Halteelemente 86 auf, an welchen, wie im Folgenden dargestellt wird, plattenförmige Wandbauteile 88 montiert werden können, sowie Befestigungsmittel 90, 92, 94, hier Schrauben, zur Befestigung der Rahmenelemente 24, 26, 28 am Knotenelement 14.

Zur Montage des Rahmensystems 10 wird in einem ersten Montageschritt das Knotenelement 14 mit dem ersten Halteelement 30 in die Ausnehmung 76 an der ersten Stirnseite 72 des ersten Rahmenelements 24 eingeschoben, so dass die erste Anlagefläche 34 am Boden der Ausnehmung 76 in der Stirnseite des ersten Rahmenelements anliegt. Anschließend wird das erste Rahmenelement 24 mit einem Befestigungsmittel 90, das von der Aufnahme 38 durch den ersten Haltesteg 30 nach außen in das erste Rahmenelement 24 ragt (Figur 4b), am Knotenelement 14 befestigt. Dabei kann insbesondere eine Schraube als Befestigungsmittel verwendet werden, die in ein vorgebohrtes Loch im ersten Rahmenelement eingeschraubt wird. Wenn Rahmenelemente aus Metall verwendet werden, sind diese mit einer Öffnung mit Innengewinde versehen.

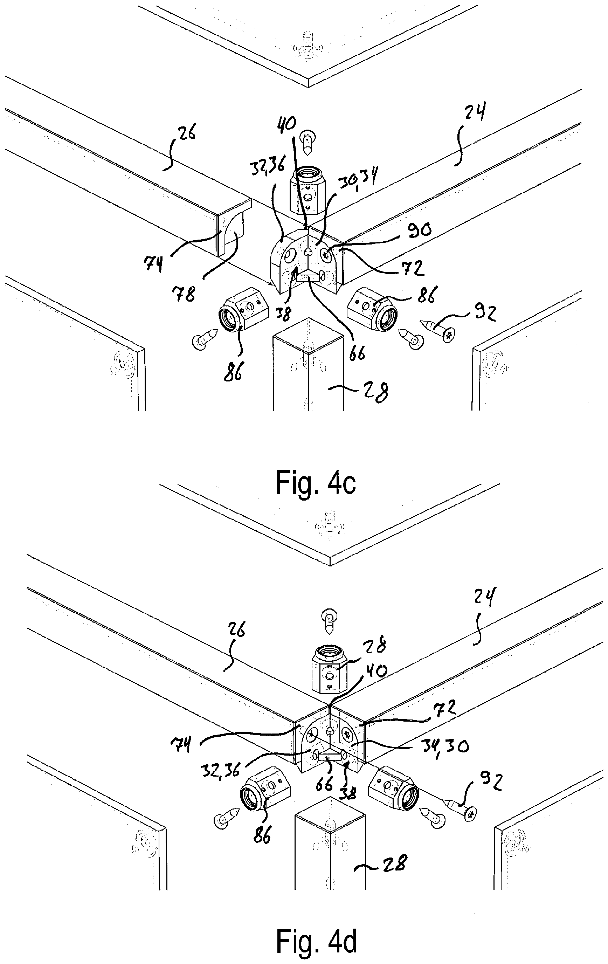

Wie in Figur 4c zu sehen ist, ist der erste Haltesteg 30 im Wesentlichen vollständig in der Ausnehmung 76 an der Stirnseite 72 des ersten Rahmenelements 24 aufgenommen und schließt insbesondere bündig mit der Stirnseite 72 ab. Seitlich steht die Anbaufläche 42 über die Außenfläche des Rahmenelements hervor.

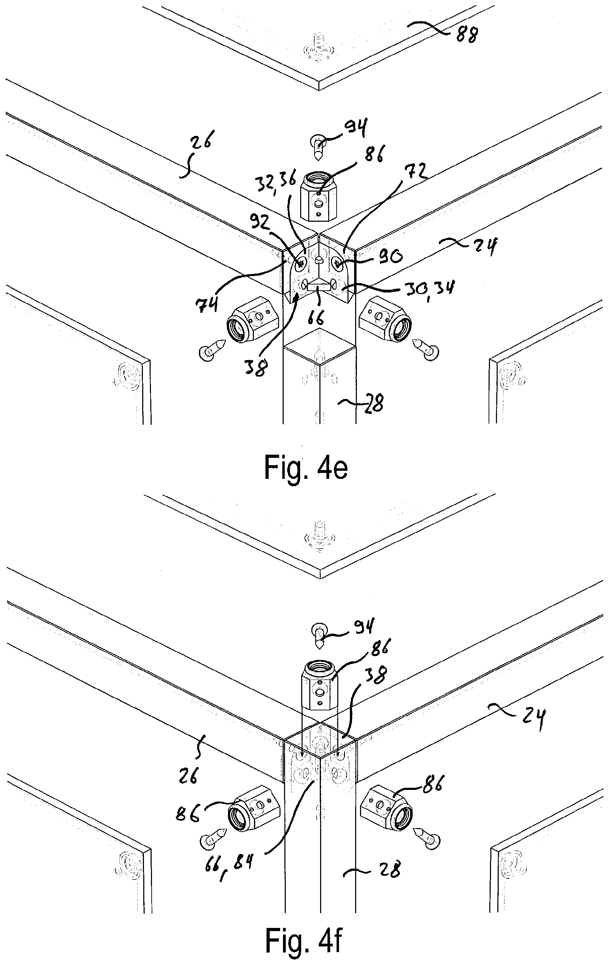

In einem weiteren Montageschritt wird das zweite Rahmenelement 26 am zweiten Haltesteg 30 montiert, indem der zweite Haltesteg 32 in die Ausnehmung 78 an der Stirnseite 74 eingeschoben wird. Anschließend wird das Knotenelement 14 mit einem zweiten Befestigungsmittel 92, das sich von der Aufnahme 38 durch den zweiten Haltesteg 32 nach außen und in das zweite Rahmenelement 26 erstreckt, befestigt (Figuren 4d und 4e).

Wie insbesondere in den Figuren 4d und 4e zu sehen ist, schließen die stehen gelassenen Stirnflächen der Stirnseiten 72, 74 bündig mit den Innenflächen der Haltestege 30, 32 ab. Dies wird dadurch erreicht, dass die Ausnehmungen 76, 78 komplementär zu den Haltestegen 30, 32 ausgebildet sind. Das heißt, diese haben nicht nur eine zu den Ausnehmungen 76, 78 komplementäre Form, sondern die Tiefe der Ausnehmungen 76, 78 entspricht auch (zumindest annähernd) der Dicke der Haltestege 30, 32.

Da der Rand der Ausnehmung der Rahmenelemente mit am Rand der Haltestege anliegt, ergibt sich eine drehfeste Verbindung zwischen den Rahmenelementen und den Haltestegen. Wenn ein Drehmoment um die Längsachse des jeweiligen Befestigungsmittels ausgeübt wird, stützt sich je nach Drehrichtung der eine oder der andere der geraden Abschnitt des Randes der Ausnehmung am geraden Abschnitt des Randes des Haltesteges ab, was eine Relativdrehung verhindert. Dabei ist vorteilhaft, dass die Abstützung in einem großen Radius vom Befestigungsmittel (und damit dem angenommenen Drehpunkt) erfolgt.

Die spiegelsymmetrische Form der ersten und der zweiten Stirnseite 72, 74 bzw. der ersten und der zweiten Ausnehmung 76, 78 ist so gewählt, dass beide Rahmenelemente 24, 26 auch am jeweils anderen Halteelement montiert werden können, so dass die Flexibilität des Rahmensystem 10 vergrößert ist, da weniger verschiedene Rahmenelemente bzw. Rahmenelemente mit verschiedenen Stirnseiten erforderlich sind.

Nachdem das erste und das zweite Rahmenelement 24, 26 am Knotenelement montiert sind, wird das dritte Rahmenelement 28 in die Aufnahme 38 eingeschoben, wobei die Aussparung 84 auf das Verstärkungselement 66 aufgeschoben wird. Dabei ist, wie in Figur 4f zu sehen ist, zwischen den Stirnseiten 72, 74 und den Seitenflächen des dritten Rahmenelements 28 kein oder lediglich ein minimaler Spalt vorhanden, da die Stirnseiten 72, 74 annähernd bündig an den Seitenflächen des dritten Rahmenelements 28 anliegen. Dadurch ergibt sich auf der Außenseite bzw. der Oberseite zwischen dem ersten bzw. dem zweiten Rahmenelement 24, 26 und dem dritten Rahmenelement 28 ein annähernd nahtloser Übergang. Insbesondere ist das Knotenelement 14 von der Außenseite betrachtet nicht oder nur geringfügig zu sehen.

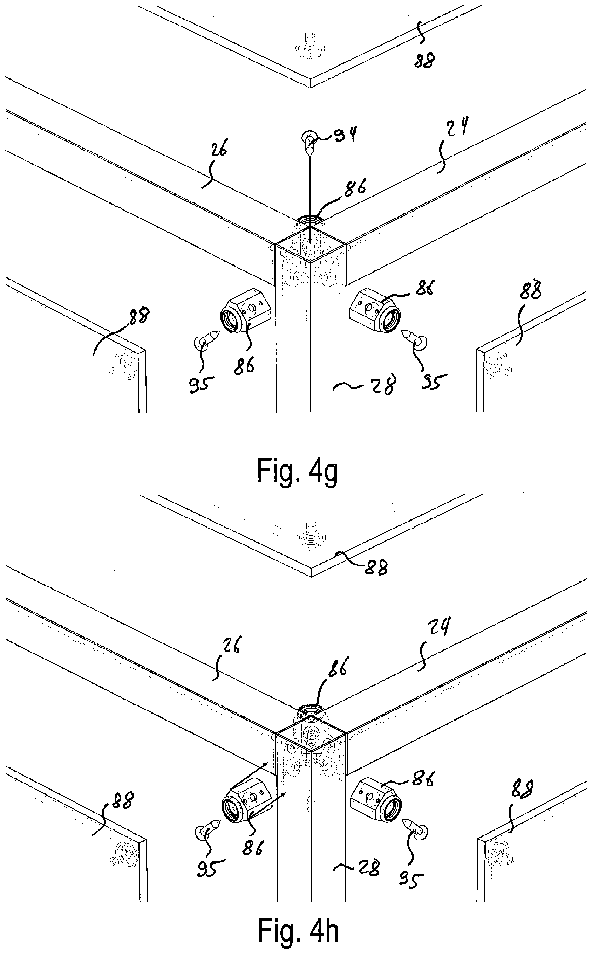

Anschließend wird ein drittes Befestigungsmittel 94 von der Anbaufläche 40 in die Aufnahme 38 und das dritte Rahmenelement 28 geführt und im Rahmenelement 28 befestigt (Figur 4g). Dadurch ist auch das dritte Rahmenelement 28 am Knotenelement 14 fixiert. Da das dritte Befestigungsmittel 94 von der Innenseite des fertigen Rahmensystems 10 in das Knotenelement 14 bzw. das dritte Rahmenelement 28 geführt ist bzw. die Anbaufläche auf der Innenseite des durch die Rahmenelemente 24, 26, 28 gebildeten Rahmensystems angeordnet ist, sind das dritte Befestigungsmittel 94 und die Anbaufläche von außen nicht sichtbar.

Wie in Figur 4g und 4h zu sehen ist, ist das Knotenelement 14 mit den beiden Haltestegen 30, 32 vollständig von den Rahmenelementen 24, 26, 28 verdeckt. Lediglich die Anbauflächen 40, 42, 44 sind sichtbar.

Der Winkel zwischen dem ersten und dem zweiten Rahmenelement 24, 26 ist durch die Haltestege 30, 32 festgelegt. Zusätzlich ist dieser Winkel durch das Verstärkungselement 66 zwischen den Haltestegen 30, 32 stabilisiert. Eine zusätzliche Stabilisierung erfolgt aber auch durch das dritte Rahmenelement 28, an dem sich die beiden Rahmenelemente 24, 26 abstützen, so dass der Winkel zwischen den Haltestegen 30, 32 nicht verringert werden kann. Das dritte Rahmenelement 28 ist senkrecht zu den zwei Rahmenelementen 24, 26 in der Aufnahme 38 geführt, so dass auch das dritte Rahmenelement 28 am ersten bzw. zweiten Rahmenelement 24, 26 abgestützt ist.

Die Anbauflächen 40, 42, 44 am Knotenelement 14 dienen zur Anbringung von Halteelementen 86, wobei das Haltemittel 86, welches zwischen den beiden Rahmenelementen 24, 26 angeordnet ist, durch das dritte Verbindungsmittel 94 zur Fixierung des dritten Rahmenelements 28 gehalten wird. Die beiderseits des Rahmenelements 28 angeordneten Halteelemente 86 werden mit zusätzlichen Befestigungsmitteln 95 montiert (Figur 4h).

Die Halteelemente 86 weisen jeweils eine ringförmige bzw. topfförmige Aufnahme 96 auf, in der ein hier nicht im Detail dargestelltes Federelement, beispielsweise eine Bügelfeder angeordnet ist, die bezüglich der Längsachse der Aufnahme radial aufgeweitet werden kann (Figuren 4i bis 4k). An den Wandbauteile 88 ist jeweils ein Gegenstück in Form eines Kopfteils 98 angebracht, das in die Aufnahme 96 eingreifen und hinter dem Federelement einschnappen kann, so dass das Wandbauteil 88 am Halteelement 86 fixiert ist. Die Verbindung zwischen plattenförmigen Wandbauteile 88 und den Halteelementen erfolgt also durch ein Befestigungssystem vom Typ Druckknopf. Dies ermöglicht ein schnelles Montieren der Wandelemente 88, die aber auch ohne Werkzeug wieder demontiert werden können. Gegenüber herkömmlichen Rastelementen ist eine schnellere Demontage ohne die Gefahr einer Beschädigung des Befestigungssystems möglich.

Das Kopfteil 98 ist vorzugsweise auf der Innenseite des Wandbauteils fest angebracht, beispielsweise angeschraubt. Das Kopfteil 98 kann alternativ an einem Bolzen vorgesehen sein, der durch eine Öffnung am Wandbauteil 88 von außen eingeschoben wird und das Wandbauteil 88 mittels eines aufgeweiteten Fußabschnittes hält.

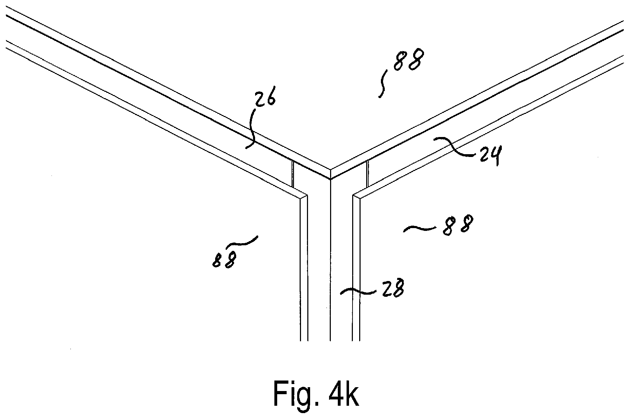

Die Wandbauteile 88 können relativ zu den Rahmenelementen 24, 26, 28 unterschiedlich angeordnet sein. Wie in Figur 4k zu sehen ist, schließt das obere Wandbauteil 88 bündig mit den Außenkanten der Rahmenelemente 24, 26 ab. Die beiden senkrecht angeordneten Wandelemente 88 sind dagegen mit Abstand zu den Außenkanten der Rahmenelemente 24, 28 bzw. 26, 28 angeordnet.

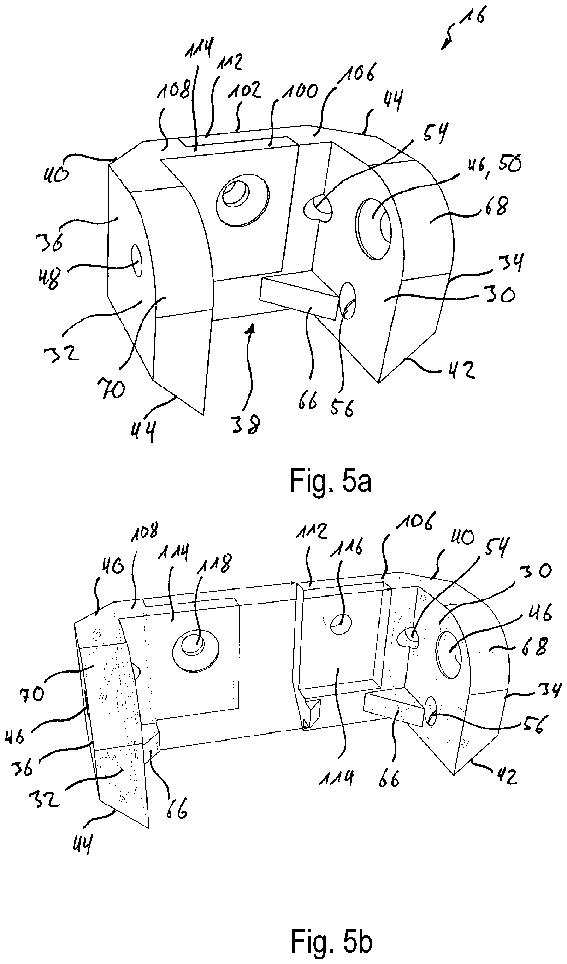

In den Figuren 5a und 5b ist eine zweite Ausführungsform eines erfindungsgemäßen Knotenelements 16 dargestellt. Für die von der ersten Ausführungsform bekannten Merkmale werden dieselben Bezugszeichen verwendet, und es wird insoweit auf die obigen Erläuterungen verwiesen.

Der wesentliche Unterschied zwischen der ersten und der zweiten Ausführungsform besteht darin, dass das Knotenelement 16 der zweiten Ausführungsform U-förmig ausgeführt ist. Dieses Knotenelement 16 hat analog zu dem in den Figuren 2 und 3a bis 3f gezeigten Knotenelement 14 zwei Haltestege 30, 32 mit jeweils einer Anlagefläche 34, 36. An den Haltestegen 30, 32 sind Anbauflächen 42, 44 sowie Öffnungen 46, 48 für jeweils ein erstes und ein zweites Befestigungsmittel 90, 92 vorgesehen.

Wesentliches Merkmal des Knotenelements 16 ist ein dritter Haltesteg 100 mit einer dritten Anlagefläche 102 und einer Öffnung 104 für ein Befestigungsmittel auf.

Der erste und der zweite Haltesteg 30, 32 sind an entgegengesetzten Seiten des dritten Haltestegs 100 in einem Winkel von jeweils 90° zu diesem angeordnet. Zwischen den Haltestegen 30, 100 bzw. 32, 100 ist auf der Innenseite bzw. in der Aufnahme 38 jeweils ein Verstärkungselement 66 vorgesehen. Auf der Außenseite ist zwischen benachbarten Anlageflächen, also den Anlageflächen 34 und 102 bzw. 36 und 102, jeweils eine Anbaufläche 40 vorgesehen, die in einem Winkel von 45° zu den angrenzenden Anlageflächen 34, 102 bzw 36, 102 angeordnet ist. Von jeder der Anbauflächen 40 erstreckt sich eine Öffnung 54 in die Aufnahme 38. An dritten Haltesteg 100 ist eine weitere Anbaufläche 105 vorgesehen, die in einem Winkel von 45° zur dritten Anlagefläche 102 angeordnet ist.

An diesem Knotenelement 16 können insgesamt vier Rahmenelemente montiert werden. Wie bei dem in den Figuren 2 sowie 3a bis 3f gezeigten Knotenelement 14 werden am ersten Haltesteg 30 sowie am zweiten Haltesteg 32 zwei Rahmenelemente 24, 26 mit jeweils einer Ausnehmung 76, 78 in der Stirnseite 72, 74 montiert. In dieser Ausführungsform sind das erste und das zweite Rahmenelement 24, 26 auf einer geraden Linie angeordnet.

Ein weiteres Rahmenelement wird mit einer Stirnseite an die dritte Anlagefläche 102 des dritten Haltestegs 100 angelegt und durch ein aus der Aufnahme 38 durch die Öffnung 104 ragendes Befestigungsmittel am Knotenelement 14 montiert. Dieses Rahmenelement erstreckt sich also rechtwinklig zum ersten bzw. zum zweiten Rahmenelement 24, 26 vom Knoten weg.

Auch an dem Rahmenelement, das an der dritten Anlagefläche 102 bzw. am dritten Haltesteg 100 befestigt wird, ist vorzugsweise eine Ausnehmung vorgesehen, in die der dritte Haltesteg im Wesentlichen vollständig eingesetzt werden kann, sodass die Stirnseite dieses Rahmenelements bündig mit der Innenseite des dritten Haltestegs 100 bzw. der Aufnahme 38 abschließt.

Anschließend kann das dritte Rahmenelement 28 in die Aufnahme 38, die in dieser Ausführungsform durch die drei Haltestege 30, 32, 100 gebildet ist und somit U-förmig ist, eingeschoben werden und durch das Befestigungsmittel 94, die von einer oder beiden Anbauflächen 40 in die Aufnahme 38 geführt werden, in der Aufnahme 38 fixiert werden.

Das dritte Rahmenelement 28 deckt auch bei dieser Ausführungsform alle Haltestege 30, 32, 100 ab und liegt mit den Seitenflächen bündig an den Stirnseiten der Rahmenelemente an.

Grundsätzlich kann auch der Knoten 16 gemäß der zweiten Ausführungsform einteilig ausgeführt werden. Allerdings sind die Öffnungen 46, 48 nur schwer zu erreichen, da sich die Haltestege 30, 32 gegenüberliegen. Dies erschwert es, das erste und das zweite Befestigungsmittel 90, 92 zu montieren, da sie nur schlecht mit einem Werkzeug erreichbar sind.

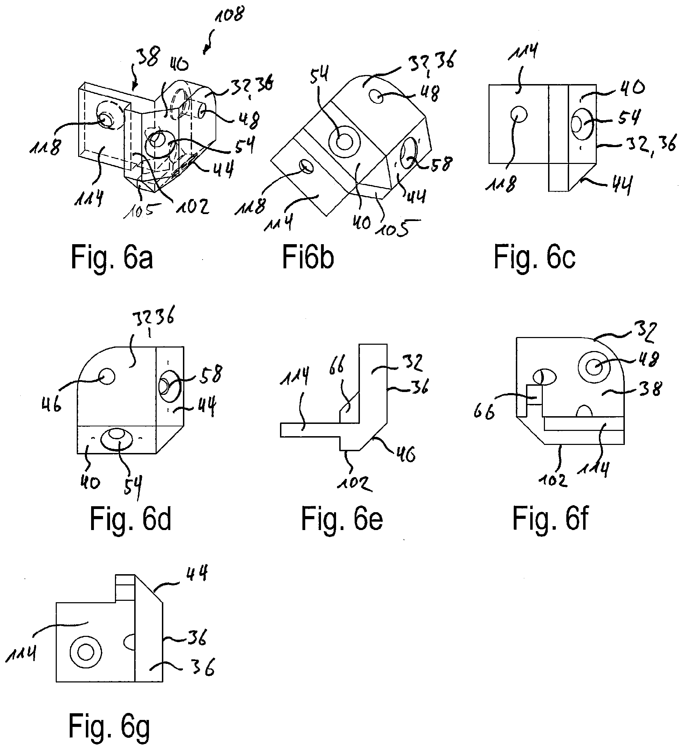

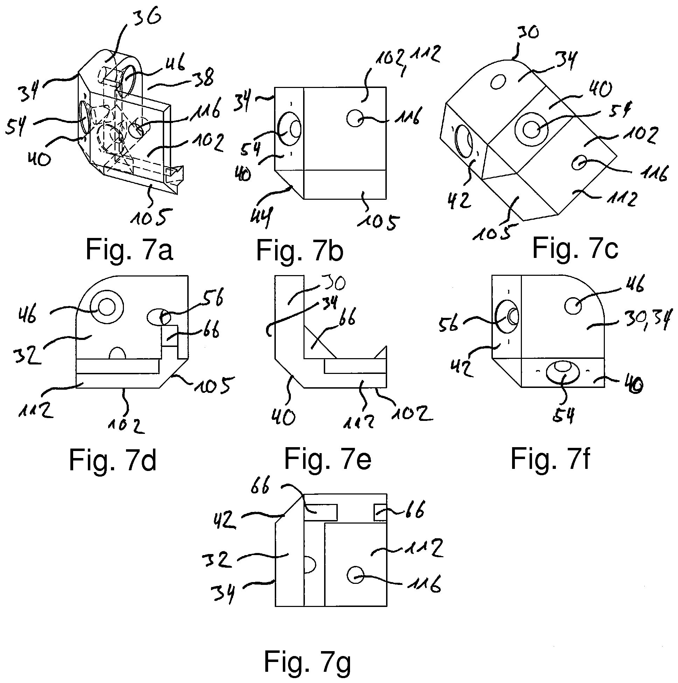

Aus diesem Grund ist das Knotenelement 16 vorzugweise zweiteilig ausgeführt, nämlich gebildet aus zwei Knotenbauteilen 106, 108, die voneinander getrennt werden können (Figur 5b). Das erste Knotenbauteil 106 ist in den Figuren 7a bis 7g und das zweite Knotenbauteil 108 in den Figuren 6a bis 6g dargestellt.

Der erste Haltesteg 30 mit der ersten Anlagefläche 34 ist am ersten Knotenbauteil 106 vorgesehen, und der zweite Haltesteg 32 mit der zweiten Anlagefläche 36 ist am zweiten Knotenbauteil 108 vorgesehen. An beiden Knotenbauteilen 106, 108 sind Verbindungsstege 110, 112 vorgesehen, die sich im montierten Zustand (Figur 5a) überlappen und gemeinsam den dritten Haltesteg 100 bilden.

Der erste Verbindungssteg 110 weist eine komplementär zum zweiten Verbindungssteg 112 ausgebildete Aussparung 114 auf, in die der zweite Verbindungssteg 112 passgenau eingesetzt werden kann. In beiden Verbindungsstegen 110, 112 sind Öffnungen 116, 118 vorgesehen, die in montiertem Zustand übereinanderliegen und gemeinsam die Öffnung 104 bilden.

Zur Montage dieses Rahmensystems 10 wird das erste Knotenbauteil 106 mit der ersten Anlagefläche 34 bzw. dem ersten Haltesteg 30 an der ersten Stirnseite 72 des ersten Rahmenelements 24 montiert. Anschließend wird das zweite Knotenbauteil 108 mit dem zweiten Haltesteg 32 bzw. der zweiten Anlagefläche 36 an der ersten Stirnseite 74 des zweiten Rahmenelements 26 montiert.

Da die Knotenbauteile 106, 108 getrennt voneinander sind, sind die Öffnungen 46, 48 problemlos erreichbar, sodass die Befestigungsmittel 92, 94 einfach in die Öffnungen 46, 48 eingesetzt und in den Rahmenelementen 24, 26 fixiert werden können.

Anschließend werden die Knotenbauteile 106, 108 zusammengesetzt, sodass sich die Verbindungsstege 110, 112 überlappen und die Öffnungen 116, 118 übereinanderliegen. In einem nächsten Montageschritt wird ein weiteres Rahmenelement mit der Stirnseite an die dritte Anlagefläche 102 ansetzt bzw. der dritte Haltesteg 100 in die Ausnehmung des weiteren Rahmenelements eingeschoben und das Rahmenelement mit einem Befestigungsmittel, das von der Aufnahme 38 durch die Öffnung 104 ragt, an der dritten Anlagefläche 102 befestigt.

Abschließend wird das dritte Rahmenelement 28 in die Aufnahme 38 eingeschoben und durch Befestigungsmittel, die sich von zumindest einer der Anbauflächen 40 in die Aufnahme 38 erstrecken, fixiert. Somit ist der Knoten fertig montiert.

Um das Rahmensystem weiterzubauen, werden an den entgegengesetzten Stirnseiten der Rahmenelemente 24, 26 jeweils ein weiteres Knotenelement und an diesem weitere Rahmenelemente montiert, sodass mit den gezeigten Rahmenelementen bzw. den Knotenelementen auch komplexe Rahmensysteme möglich sind.

Die Knotenelemente 14, 16 sind vorzugsweise aus Kunststoff, insbesondere aus einem Polyoxymethylen (POM) hergestellt, das zum einen eine ausreichende Stabilität bereitstellt, gleichzeitig aber auch eine gewisse Flexibilität bereitstellt, so dass die Knotenelemente 14, 16 alle auftretenden Belastungen sicher aufnehmen können.

## Patentansprüche

1. Rahmensystem (10), insbesondere Möbelsystem, mit
zumindest drei länglichen Rahmenelementen (24, 26, 28), von denen mindestens zwei senkrecht zueinander angeordnet sind, und
zumindest einem Knotenelement (14, 16) zum Verbinden der Rahmenelemente (24, 26, 28),
wobei das Knotenelement (14, 16) zumindest zwei Haltestege (30, 32, 100) aufweist, wobei auf der Außenseite des ersten Haltesteges (30) eine erste Anlagefläche (34) für eine erste Stirnseite (72) eines ersten Rahmenelements (24) sowie auf der Außenseite des zweiten Haltesteges (32) eine zweite Anlagefläche (36) für eine erste Stirnseite (74) eines zweiten Rahmenelements (26) vorgesehen sind,
wobei zwischen den Haltestegen (30, 32, 100) eine Aufnahme (38) gebildet ist, die zumindest zwei Seitenflächen des dritten Rahmenelements (28) aufnehmen kann, und
wobei an zumindest einer Stirnseite (72, 74) des ersten und des zweiten Rahmenelements (24, 26) jeweils eine im Wesentlichen komplementär zur jeweiligen Anlagefläche (34, 36, 102) ausgebildete Ausnehmung (76, 78) vorgesehen ist, die den jeweiligen Haltesteg (30, 32, 100) aufnehmen kann, so dass der Haltesteg (30, 32, 100) im Wesentlichen bündig mit der Stirnseite (72, 74) aufgenommen werden kann.

2. Rahmensystem nach Anspruch 1, **dadurch gekennzeichnet, dass** Befestigungsmittel (90, 92, 94) zur Befestigung der Rahmenelemente (24, 26, 28) am Knotenelement (14, 16) vorgesehen sind, wobei sich ein erstes Befestigungsmittel (90) von der Aufnahme (38) durch den ersten Haltesteg (30) in das erste Rahmenelement (24) erstreckt und ein zweites Befestigungsmittel (92) von der Aufnahme (38) durch den zweiten Haltesteg (32) in das zweite Rahmenelement (26) erstreckt, und sich ein drittes Befestigungsmittel (94) von außen durch eine Öffnung (54) im Knotenelement (14, 16) in die Aufnahme (38) und in das dritte Rahmenelement (28) erstreckt.

3. Rahmensystem nach Anspruch 2, **dadurch gekennzeichnet, dass** die Haltestege (30, 32, 100) senkrecht zueinander angeordnet sind und dass die Öffnung (54) für das Befestigungsmittel (94) des dritten Rahmenelement (28) zwischen den Haltestegen (30, 32, 100) angeordnet ist, wobei sich die Mittelachse der Öffnung (54) insbesondere in einem Winkel von 45° zu einer der Anlageflächen (34, 36, 102) erstreckt.

4. Rahmensystem nach Anspruch 2, **dadurch gekennzeichnet, dass** am Knotenelement (14, 16) ein dritter Haltesteg (100) mit einer dritten Anlagefläche (102) für die Stirnseite eines Rahmenelement, insbesondere mit einer Öffnung (104) für ein Befestigungsmittel, vorgesehen ist, und der erste und der zweite Haltesteg (30, 32) an gegenüberliegenden Seiten des dritten Haltestegs (100), insbesondere in einem Winkel von jeweils 90° zu dieser angeordnet sind, wobei insbesondere an der Stirnseite des weiteren Rahmenelements eine komplementär zur dritten Anlagefläche (102) ausgebildete Ausnehmung vorgesehen ist, die den dritten Haltesteg (100) aufnehmen kann, so dass der Haltesteg (100) im Wesentlichen bündig mit der Stirnseite aufgenommen werden kann.

5. Rahmensystem nach Anspruch einem der Ansprüche 2 bis 4, **dadurch gekennzeichnet, dass** zwischen benachbarten Haltestegen jeweils eine nach außen gerichteten Anbaufläche (40) vorgesehen ist, die insbesondere in einem Winkel von 45° zu den angrenzenden Anlageflächen (34, 36, 102) angeordnet ist, wobei sich insbesondere die Öffnung (54) für das Befestigungsmittel (94) des dritten Rahmenelements (28) durch die Anbaufläche (40) erstreckt.

6. Rahmensystem nach einem der vorhergehenden Ansprüche, **dadurch gekennzeichnet, dass** das Knotenelement (14, 16) aus zwei Knotenbauteilen (106, 108) besteht, wobei die erste Anlagefläche (34) am ersten Knotenbauteil (106) und die zweite Anlagefläche (36) am zweiten Knotenbauteil (108) vorgesehen ist, und die Knotenbauteile (106, 108) überlappende Verbindungsstege (110, 112) aufweisen, mit komplementären Öffnungen (116, 118) für ein Befestigungsmittel für ein Rahmenelement, das sich insbesondere von der Aufnahme (38) nach außen erstreckt, wobei die überlappenden Verbindungsstege (110, 112) einen dritten Haltesteg (100) bildet und das Befestigungsmittel, das sich durch die Öffnungen (116, 118) erstreckt, das Rahmenelement fixiert, das an der dritten Anlagefläche (102) befestigt ist.

7. Rahmensystem nach einem der vorhergehenden Ansprüche, **dadurch gekennzeichnet, dass** der Rand (80, 82) der Ausnehmung (76, 78) so mit dem jeweiligen Haltesteg (30, 32) zusammenwirkt, dass ein Verdrehen des Rahmenelements (24, 26) um die Mittelachse des Befestigungsmittels (90, 92) nicht möglich ist.

8. Rahmensystem nach einem der vorhergehenden Ansprüche, **dadurch gekennzeichnet, dass** an zumindest einem Haltesteg (30, 32, 100) eine zusätzliche Anbaufläche (42, 44) mit einer Öffnung (56, 58) vorgesehen ist, die zu einer angrenzenden Anlagefläche (34, 36, 102) eine Winkel von 45° aufweist, wobei die Anbaufläche (42, 44) insbesondere aus einer Ausnehmung (76, 78) eines Rahmenelements (24, 26) über die Seitenfläche des Rahmenelements (24, 26) vorstehen kann.

9. Rahmensystem nach einem Ansprüche 5 bis 8, **dadurch gekennzeichnet, dass** zumindest ein Halteelement (86) für ein insbesondere flächiges Wandbauteil (88) vorgesehen ist, das an einer Anbaufläche (40, 42, 44) mit einem Befestigungsmittel (94, 95) gehalten ist, wobei zwischen dem Halteelement (86) und dem Wandbauteil (88) ein Befestigungssystem vom Typ Druckknopf vorgesehen ist.

10. Rahmensystem nach einem der vorhergehenden Ansprüchen, **dadurch gekennzeichnet, dass** zwischen benachbarten Haltestegen (30, 32, 100) in der Aufnahme (38) ein Verstärkungselement (66) und am dritten Rahmenelement (28) eine zum Verstärkungselement (66) komplementäre Aussparung (84) vorgesehen ist.

11. Rahmensystem nach einem der vorhergehenden Ansprüche, **dadurch gekennzeichnet, dass** das Knotenelement (14, 16) aus einem Kunststoff, insbesondere aus Polyoxymethylen (POM) hergestellt ist.

12. Knotenelement (14, 16) für ein Rahmensystem (10) nach einem der vorhergehenden Ansprüche, zur Montage von mindestens drei Rahmenelemente (24, 26, 28), wobei zumindest zwei Rahmenelemente 24, 26, 28) senkrecht zueinander angeordnet sind, mit zumindest zwei Haltestegen (30, 32, 100), die insbesondere jeweils eine Öffnung (46, 48) für ein Befestigungsmittel (90, 92) aufweisen, wobei auf der Außenseite des ersten Haltesteges (30) eine erste Anlagefläche (34) vorgesehen ist, die zur Befestigung einer ersten Stirnseite (72) eines ersten Rahmenelements (24) geeignet ist, sowie auf der Außenseite des zweiten Haltesteges (32) eine zweite Anlagefläche (36) vorgesehen ist, die zur Befestigung einer erster Stirnseite (74) eines zweiten Rahmenelements (26) vorgesehen sind, und zwischen den Haltestegen (30, 32, 100) eine Aufnahme (38) gebildet ist, die geeignet ist, um zumindest zwei Seitenflächen des dritten Rahmenelements (28) aufzunehmen.

13. Knotenelement nach Anspruch 12, **dadurch gekennzeichnet, dass** zwischen benachbarten Haltestegen (30, 32, 100) jeweils eine nach außen gerichtete Anbaufläche (40) vorgesehen ist, die insbesondere in einem Winkel von 45° zur jeweils angrenzenden Anlagefläche (34, 36, 102) angeordnet ist und die insbesondere eine Öffnung (54) für ein Befestigungsmittel (94) aufweist, deren Mittelachse sich senkrecht zur Anbaufläche (40) erstreckt.

14. Knotenelement nach einem der Ansprüche 12 und 13, **dadurch gekennzeichnet, dass** die Haltestege (30, 32) in einem Winkel von 90° zueinander angeordnet sind und zwischen den Anlageflächen (34, 36) eine Anbaufläche (40) vorgesehen ist.

15. Knotenelement nach einem der Ansprüche 12 und 13, **dadurch gekennzeichnet, dass** ein dritter Haltesteg (100) mit einer dritte Anlagefläche (102) für ein Rahmenelement, insbesondere mit einer Öffnung (104) für ein Befestigungsmittel, vorgesehen ist, und die erste und die zweite Anlagefläche (34, 36) an gegenüberliegenden Seiten der dritten Anlagefläche (102), insbesondere in einem Winkel von jeweils 90° zu dieser, angeordnet sind.

16. Knotenelement nach einem der Ansprüche 12 bis 15, **dadurch gekennzeichnet, dass** das Knotenelement (14, 16) aus zwei Knotenbauteilen (106, 108) besteht, wobei die erste Anlagefläche (34) am ersten Knotenbauteil (106) und die zweite Anlagefläche (36) am zweiten Knotenbauteil (108) vorgesehen ist, und die Knotenbauteile (106, 108) überlappende Verbindungsstege (110, 112) aufweisen, die mit komplementären Öffnungen (116, 118) für ein Befestigungsmittel versehen sind, das sich insbesondere von der Aufnahme (38) nach außen erstreckt, wobei die überlappenden Verbindungsstege (110, 112) einen dritten Haltesteg (100) bildet, an dem die erste und die zweite Anlagefläche (34, 36) an gegenüberliegenden Seiten insbesondere in einem Winkel von jeweils 90° zu diesem angeordnet sind.

17. Knotenelement nach einem der Ansprüche 12 bis 16, **dadurch gekennzeichnet, dass** an zumindest einer freien Kante eines Haltesteges (30, 32, 100) eine zusätzliche, insbesondere im Winkel von 45° zur Anlagefläche (34, 36, 102) geneigte, Anbaufläche (42, 44) vorgesehen ist.

## Claims

1. Frame system (10), particularly a furniture system, with
at least three longitudinal frame elements (24, 26, 28), of which at least two are arranged perpendicular to one another, and
at least one node element (14, 16) for connecting the frame elements (24, 26, 28),
wherein the node element (14, 16) has at least two fixing webs (30, 32, 100), with a first contact surface (34) for a first end face (72) of a first frame element (24) on the external face of the first fixing web (30) as well as a second contact surface (36) for a first end face (74) of a second frame element (26) provided on the external face of the second fixing web (32),
wherein between the fixing webs (30, 32, 100) a seat (38) is formed which is capable of accommodating at least two side faces of the third frame element (28), and
wherein on at least one end face (72, 74) of the first and of the second frame element (24, 26) respectively a recess (76, 78) is provided which is substantially complementary to the respective contact surface (34, 36, 102) and is able to accommodate the respective fixing web (30, 32, 100), so that the fixing web (30, 32, 100) can be accommodated substantially flush with the end face (72, 74).

2. Frame system according to claim 1, **characterised in that** fastening means (90, 92, 94) are provided on the node element (14, 16) for fixing the frame elements (24, 26, 28), wherein a first fastening means (90) extends from the seat (38) through the first fixing web (30) into the first frame element (24) and a second fastening means (92) extends from the seat (38) through the second fixing web (32) into the second frame element (26), and a third fastening means (94) extends from outside through an opening (54) in the node element (14, 16) into the seat (38) and into the third frame element (28).

3. Frame system according to claim 2, **characterised in that** the fixing webs (30, 32, 100) are arranged perpendicular to one another and **in that** the opening (54) for the fastening means (94) of the third frame element (28) is arranged between the fixing webs (30, 32, 100), wherein the central axis of the opening (54) extends in particular at an angle of 45° to one of the contact surfaces (34, 36, 102).

4. Frame system according to claim 2, **characterised in that** on the node element (14, 16) a third fixing web (100) is provided with a third contact surface (102) for the end face of a frame element, particularly with an opening (104) for a fastening means, and the first and the second fixing web (30, 32) are arranged on opposing faces of the third fixing web (100), in particular at an angle of 90° respectively, wherein in particular at the end face of the further frame element a recess is provided which is complementary to the third contact surface (102) and is capable of receiving the third fixing web (100), so that the fixing web (100) can be accommodated substantially flush with the end face.

5. Frame system according to any one of claims 2 to 4, **characterised in that** between adjacent fixing webs respectively an outward oriented seating face (40) is provided which is arranged in particular at an angle of 45° to the adjacent contact surfaces (34, 36, 102), wherein in particular the opening (54) for the fastening means (94) of the third frame element (28) extends through the seating face (40).

6. Frame system according to any one of the preceding claims, **characterised in that** the node element (14, 16) consists of two node components (106, 108), wherein the first contact surface (34) is provided on the first node component (106) and the second contact surface (36) is provided on the second node component (108), and the node components (106, 108) have overlapping connecting webs (110, 112), with complementary openings (116, 118) for a fastening means for a frame element, said fastening means extending outwards in particular from the seat (38), wherein the overlapping connecting webs (110, 112) form a third fixing web (100) and the fastening means extending through the openings (116, 118) fixes the frame element which is fastened to the third contact surface (102).

7. Frame system according to any one of the preceding claims, **characterised in that** the edge (80, 82) of the recess (76, 78) interacts with the respective fixing web (30, 32) in such a manner that a twisting of the frame element (24, 26) around the central axis of the fastening means (90, 92) is impossible.

8. Frame system according to any one of the preceding claims, **characterised in that** on at least one fixing web (30, 32, 100) an additional seating face (42, 44) is provided with an opening (56, 58) which is at an angle of 45° to an adjacent contact surface (34, 36, 102), wherein the seating face (42, 44) can protrude in particular out of a recess (76, 78) of a frame element (24, 26) beyond the side face of the frame element (24, 26).

9. Frame system according to any one of claims 5 to 8, **characterised in that** at least one holding element (86) is provided for in particular a flat wall component (88) that is held on a seating face (40, 42, 44) with a fastening means (94, 95), wherein a fastening system of the push-button type is provided between the holding element (86) and the wall component (88).

10. Frame system according to any one of the preceding claims, **characterised in that** a reinforcing element (66) is provided in the seat (38) between adjacent fixing webs (30, 32, 100) and, on the third frame element (28), a recess (84) is provided complementary to the reinforcing element (66).

11. Frame system according to any one of the preceding claims, **characterised in that** the node element (14, 16) is manufactured from a plastic, in particular from polyoxymethylene (POM).

12. Node element (14,16) for a frame system (10) according to any one of the preceding claims, for seating at least three frame elements (24, 26, 28), wherein at least two frame elements (24, 26, 28) are arranged perpendicular to one another, with at least two fixing webs (30, 32, 100) that have in particular one opening (46, 48) respectively for a fastening means (90, 92), wherein on the external face of the first fixing web (30) a first contact surface (34) is provided which is suitable for fixing a first end face (72) of a first frame element (24), and on the external face of the second fixing web (32) a second contact surface (36) is provided, both of which are provided for fixing a first end face (74) of a second frame element (26), and between the fixing webs (30, 32, 100) a seat (38) is formed which is suitable for accommodating at least two side faces of the third frame element (28).

13. Node element according to claim 12, **characterised in that** between adjacent fixing webs (30, 32, 100) respectively an outward oriented seating face (40) is provided, which is arranged in particular at an angle of 45° to the respectively adjacent contact surface (34, 36, 102) and which has in particular an opening (54) for a fastening means (94) whose central axis extends perpendicular to the seating face (40).

14. Node element according to any one of claims 12 and 13, **characterised in that** the fixing webs (30, 32) are arranged at an angle of 90° to one another and a seating face (40) is provided between the contact surfaces (34, 36).

15. Node element according to any one of claims 12 and 13, **characterised in that** a third fixing web (100) is provided with a third contact surface (102) for a frame element, in particular with an opening (104) for a fastening means, and the first and the second contact surfaces (34, 36) are provided at opposing faces of the third contact surface (102), in particular at an angle of 90° to it respectively.

16. Node element according to any one of claims 12 to 15, **characterised in that** the node element (14, 16) comprises two node components (106, 108), wherein the first contact surface (34) is provided on the first node component (106) and the second contact surface (36) is provided on the second node component (108), and the node components (106, 108) have overlapping connecting webs (110, 112) that are provided with complementary openings (116, 118) for a fastening means which extends outwards in particular from the seat (38), wherein the overlapping connecting webs (110, 112) form a third fixing web (100) on which the first and the second contact surfaces (34, 36) are provided on opposing faces in particular at an angle of 90° to it respectively.

17. Node element according to any one of claims 12 to 16, **characterised in that** on at least one free edge of a fixing web (30, 32, 100) an additional seating face (42, 44) is provided, inclined particularly at an angle of 45° to the contact surface (34, 36, 102).

## Revendications

1. Système de cadre (10), en particulier système de meuble, comportant
au moins trois éléments de cadre allongés (24, 26, 28), dont au moins deux sont agencés perpendiculairement l'un à l'autre, et
au moins un élément de noeud (14, 16) pour le raccordement des éléments de cadre (24, 26, 28),
l'élément de noeud (14, 16) présentant au moins deux barrettes de retenue (30, 32, 100), une première surface d'appui (34) pour une première face frontale (72) d'un premier élément de cadre (24) étant prévue sur la face extérieure de la première barrette de retenue (30), et une deuxième surface d'appui (36) pour une première face frontale (74) d'un deuxième élément de cadre (26) étant prévue sur la face extérieure de la deuxième barrette de retenue (32),
un logement (38) étant réalisé entre les barrettes de retenue (30, 32, 100), lequel est apte à recevoir au moins deux faces latérales du troisième élément de cadre (28), et
un évidement (76, 78) réalisé sensiblement complémentaire à la surface d'appui (34, 36, 102) correspondante étant respectivement prévu sur au moins une face frontale (72, 74) du premier et du deuxième élément de cadre (24, 26), l'évidement étant apte à recevoir la barrette de retenue (30, 32, 100) correspondante de sorte que la barrette de retenue (30, 32, 100) peut être reçue sensiblement en affleurement avec la face frontale (72, 74).

2. Système de cadre selon la revendication 1, **caractérisé en ce qu'**il est prévu des moyens de fixation (90, 92, 94) pour la fixation des éléments de cadre (24, 26, 28) sur l'élément de noeud (14, 16), un premier moyen de fixation (90) s'étendant depuis le logement (38) à travers la première barrette de retenue (30) jusque dans le premier élément de cadre (24), et un deuxième moyen de fixation (92) s'étendant depuis le logement (38) à travers la deuxième barrette de retenue (32) jusque dans le deuxième élément de cadre (26), et un troisième élément de fixation (94) s'étendant depuis l'extérieur à travers un orifice (54) dans l'élément de noeud (14, 16) jusque dans le logement (38) et dans le troisième élément de cadre (28).

3. Système de cadre selon la revendication 2, **caractérisé en ce que** les barrettes de retenue (30, 32, 100) sont agencées perpendiculairement les unes par rapport aux autres et **en ce que** l'orifice (54) pour le moyen de fixation (94) du troisième élément de cadre (28) est agencé entre les barrettes de retenue (30, 32, 100), l'axe central de l'orifice (54) s'étendant en particulier selon un angle de 45° par rapport à l'une des surfaces d'appui (34, 36, 102).

4. Système de cadre selon la revendication 2, **caractérisé en ce qu'**une troisième barrette de retenue (100) présentant une troisième surface d'appui (102) pour la face frontale d'un élément de cadre, présentant en particulier un orifice (104) pour un moyen de fixation est prévue sur l'élément de noeud (14, 16), et **en ce que** la première et la deuxième barrette de retenue (30, 32) sont agencées sur des faces opposées de la troisième barrette de retenue (100), en particulier chacune selon un angle de 90° par rapport à celle-ci, un évidement réalisé de manière complémentaire à la troisième surface d'appui (102) étant en particulier prévu sur la face frontale de l'élément de cadre additionnel, l'évidement étant apte à recevoir la troisième barrette de retenue (100) de sorte que la barrette de retenue (100) peut être reçue sensiblement en affleurement avec la face frontale.

5. Système de cadre selon l'une des revendications 2 à 4, **caractérisé en ce qu'**il est prévu entre des barrettes de retenue adjacentes une surface de montage respective (40) orientée vers l'extérieur, laquelle est en particulier agencée selon un angle de 45° par rapport aux surfaces d'appui adjacentes (34, 36, 102), l'orifice (54) pour le moyen de fixation (94) du troisième élément de cadre (28) s'étendant en particulier à travers la surface de montage (40).

6. Système de cadre selon l'une des revendications précédentes, **caractérisé en ce que** l'élément de noeud (14, 16) est composé de deux composants de noeud (106, 108), la première surface d'appui (34) étant prévue sur le premier composant de noeud (106), et la deuxième surface d'appui (36) étant prévue sur le deuxième composant de noeud (108), et les composants de noeud (106, 108) présentant des barrettes de raccordement (110, 112) qui se chevauchent et présentent des orifices complémentaires (116, 118) pour un moyen de fixation pour un élément de cadre qui s'étend en particulier depuis le logement (38) vers l'extérieur, les barrettes de raccordement (110, 112) qui se chevauchent formant une troisième barrette de retenue (100), et le moyen de fixation qui s'étend à travers les orifices (116, 118) attachant l'élément de cadre qui est fixé sur la troisième surface d'appui (102).

7. Système de cadre selon l'une des revendications précédentes, **caractérisé en ce que** le bord (80, 82) de l'évidement (76, 78) coopére avec la barrette de retenue (30, 32) correspondante de sorte qu'une torsion de l'élément de cadre (24, 26) autour de l'axe central du moyen de fixation (90, 92) n'est pas possible.

8. Système de cadre selon l'une des revendications précédentes, **caractérisé en ce qu'**une surface de montage (42, 44) additionnelle comportant un orifice (56, 58) et présentant un angle de 45° par rapport à une surface d'appui adjacente (34, 36, 102) est prévue sur au moins une barrette de retenue (30, 32, 100), la surface de montage (42, 44) pouvant en particulier faire saillie hors d'un évidement (76, 78) d'un élément de cadre (24, 26) au-delà de la face latérale de l'élément de cadre (24, 26).

9. Système de cadre selon l'une des revendications 5 à 8, **caractérisé en ce qu'**il est prévu au moins un élément de retenue (86) pour un composant de paroi (88) en particulier plan, lequel est retenu sur une surface de montage (40, 42, 44) à l'aide d'un moyen de fixation (94, 95), un système de fixation du type bouton de pression étant prévu entre l'élément de retenue (86) et le composant de paroi (88).

10. Système de cadre selon l'une des revendications précédentes, **caractérisé en ce qu'**un élément de renforcement (66) est prévu dans le logement (38) entre des barrettes de retenue adjacentes (30, 32, 100), et un creux (84) complémentaire à l'élément de renforcement (66) est prévu sur le troisième élément de cadre (28).

11. Système de cadre selon l'une des revendications précédentes, **caractérisé en ce que** l'élément de noeud (14, 16) est réalisé en matière plastique, en particulier en polyoxyméthylène (POM).

12. Élément de noeud (14, 16) pour un système de cadre (10) selon l'une des revendications précédentes pour le montage d'au moins trois éléments de cadre (24, 26, 28), au moins deux éléments de cadre (24, 26, 28) étant agencés perpendiculairement l'un à l'autre, comportant au moins deux barrettes de retenue (30, 32, 100) qui présentent en particulier chacune un orifice (46, 48) pour un moyen de fixation (90, 92), une première surface d'appui (34) apte à la fixation d'une première face frontale (72) d'un premier élément de cadre (24) étant prévue sur la face extérieure de la première barrette de retenue (30), et une deuxième surface d'appui (36) prévue pour la fixation d'une première face frontale (74) d'un deuxième élément de cadre (26) étant prévue sur la face extérieure de la deuxième barrette de retenue (32), et un logement (38) étant réalisé entre les barrettes de retenue (30, 32, 100), lequel est apte à recevoir au moins deux faces latérales du troisième élément de cadre (28).

13. Élément de noeud selon la revendication 12, **caractérisé en ce qu'**une surface de montage (40) orientée vers l'extérieur est respectivement prévue entre des barrettes de retenue adjacentes (30, 32, 100), laquelle est en particulier agencée selon un angle de 45° par rapport à la surface d'appui (34, 36, 102) adjacente correspondante et présente en particulier un orifice (54) pour un moyen de fixation (94) dont l'axe central s'étend perpendiculairement à la surface de montage (40).

14. Élément de noeud selon l'une des revendications 12 et 13, **caractérisé en ce que** les barrettes de retenue (30, 32) sont agencées selon un angle de 90° l'une par rapport à l'autre, et **en ce qu'**une surface de montage (40) est prévue entre les surfaces d'appui (34, 36).

15. Élément de noeud selon l'une des revendications 12 et 13, **caractérisé en ce qu'**il est prévu une troisième barrette de retenue (100) qui présente une troisième surface d'appui (102) pour un élément de cadre, en particulier un orifice (104) pour un moyen de fixation, et **en ce que** la première et la deuxième surface d'appui (34, 36) sont agencées sur des faces opposées de la troisième surface d'appui (102), en particulier respectivement selon un angle de 90° par rapport à celle-ci.

16. Élément de noeud selon l'une des revendications 12 à 15, **caractérisé en ce que** l'élément de noeud (14, 16) est composé de deux composants de noeud (106, 108), la première surface d'appui (34) étant prévue sur le premier composant de noeud (106) et la deuxième surface d'appui (36) étant prévue sur le deuxième composant de noeud (108), et les composants de noeud (106, 108) présentant des barrettes de raccordement (110, 112) qui se chevauchent et qui sont pourvues d'orifices complémentaires (116, 118) pour un moyen de fixation qui s'étend en particulier depuis le logement (38) vers l'extérieur, les barrettes de raccordement (110, 112) qui se chevauchent formant une troisième barrette de retenue (100) sur laquelle la première et la deuxième surface d'appui (34, 36) sont agencées sur des faces opposées, en particulier respectivement selon un angle de 90° par rapport à celle-ci.

17. Élément de noeud selon l'une des revendications 12 à 16, **caractérisé en ce qu'**il est prévu une surface de montage (42, 44) additionnelle sur au moins une arête libre d'une barrette de retenue (30, 32, 100), laquelle est en particulier inclinée selon un angle de 45° par rapport à la surface d'appui (34, 36, 102).
